# DEMANDE DE BREVET EUROPEEN

(11) **EP 4 089 794 A2**
(43) Date de publication de la demande: **16.11.2022**
(21) Numéro de dépôt: 22172437.0
(22) Date de dépôt: 10.05.2022
(51) Int. Cl.: H01M 10/613, H01M 10/617, H01M 10/625, H01M 10/653, H01M 10/6556, H01M 10/658

(54) **UNITÉ DE BATTERIE AVEC DES MOYENS DE CONTROLE OU DE RÉGULATION DE TEMPÉRATURE INTÉGRÉS**

(30) Priorité: 12.05.2021 FR 2105051
(71) Demandeur: Sogefi Air & Cooling, 78280 Guyancourt (FR)
(72) Inventeur: SCHUB, Arnaud, 68040 INGERSHEIM (FR); DE AZEVEDO, Mickaël, 68770 AMMERSCHWIHR (FR)
(74) Mandataire: Cabinet Nuss

(57) **Abrégé**

La présente invention concerne une unité de batterie (1) comprenant une pluralité de cellules (2), un boîtier logeant lesdites cellules (2) et des moyens de régulation de la température des cellules (2) par circulation de fluide caloporteur, lesquels comportent des zones (5) d'échange thermique entre lesdites cellules (2) et le fluide caloporteur, avec chacune un élément surfacique (6) à conductivité thermique élevée, qui est en contact sur une première face avec des cellules (2) et en contact sur sa seconde face avec le fluide caloporteur, et qui délimite avec un autre élément surfacique complémentaire (7) une plaque de refroidissement avec un volume de circulation interstitiel.

Cette unité de batterie (1) est caractérisée en ce que l'élément surfacique (6) comprend au moins un élément (10) dégradant localement l'échange thermique entre ledit fluide et la première face de l'élément surfacique (6) en contact avec les cellules (2).

## Description

La présente invention concerne le domaine des sources d'énergie électriques autonomes, en particulier celles embarquées dans des véhicules automobiles, et a pour objet une unité de batterie avec des moyens de contrôle ou de régulation de température intégrés et un véhicule automobile hybride ou électrique comportant au moins une telle unité.

Les véhicules hybrides/électriques sont équipés d'une batterie permettant de stocker l'énergie électrique nécessaire à leur fonctionnement. Les enjeux actuels nécessitent d'optimiser la conception des unités de batterie aussi dénommées « packs batteries », afin d'en tirer les meilleures performances en termes de durée de vie (charge/décharge) et d'autonomie de roulage. Le temps de charge est également un facteur important dans l'utilisation quotidienne de ces packs batteries.

Les batteries mises en œuvre ont idéalement besoin de fonctionner à des températures entre 10 °C et 30 °C, en particulier les batteries à haute densité de stockage, du type par exemple Li-ion ou Li-polymère. Une température trop basse impacte l'autonomie et une température trop élevée impacte la durée de vie des batteries. Il est donc nécessaire de réguler au mieux la température des batteries.

Dans le cadre des applications embarquées sur véhicules, il existe des solutions de batteries refroidies par air mais l'échange thermique reste assez limité. La tendance actuelle est d'utiliser un fluide caloporteur afin d'améliorer les échanges thermiques et d'augmenter l'efficacité de la régulation.

De nombreuses conceptions existent dans l'état de la technique : elles utilisent des solutions métalliques (acier, aluminium, etc.) avec une distribution de fluide caloporteur par durites jusqu'à des plaques de refroidissement assemblées et disposées à l'intérieur du pack batterie, sur lesquelles reposent les modules regroupant les cellules ou éléments de la batterie.

Par les documents WO2019/197338, WO2019/197340 et WO2019/243222, on connait des batteries avec un boîtier en matière thermoplastique comprenant un double fond thermorégulé par circulation de liquide caloporteur et sur lequel reposent les cellules de la batterie. Ce double fond comporte une paroi thermiquement conductrice qui est contactée d'un côté par le fluide caloporteur et de l'autre par les cellules.

Selon une première variante, ce double fond peut se présenter sous la forme d'une plaque creuse (connue sous la désignation « cooling plate » - plaque de refroidissement) constituée de deux demi-coques métalliques (par exemple en aluminium) assemblées entre elles et présentant dans le volume creux au moins un chemin de circulation du liquide entre une entrée d'alimentation et une sortie d'évacuation au moins. Le chemin de circulation, généralement en forme de serpentin ou de réseau de canaux parallèles, est configuré pour irriguer la totalité de la surface de la paroi de la plaque en contact avec les cellules. Bien entendu, le double fond peut être composé de plusieurs plaques creuses individuelles côte à côte avec chacune son chemin de circulation et ses entrée et sortie, éventuellement reliées fluidiquement entre elles et supportant chacune un module de batterie regroupant plusieurs cellules.

Selon une autre variante possible, le double fond peut consister en une plaque thermiquement conductrice, notamment métallique, directement rapportée sur le fond du boîtier plastique avec formation d'au moins un chemin de circulation de fluide liquide entre eux, reliant au moins une entrée à au moins une sortie.

Or, il est important de réguler thermiquement les cellules de manière homogène afin qu'elles subissent toutes un vieillissement sensiblement uniforme et pour prolonger au mieux leur durée de vie. Typiquement, on cherche à obtenir une différence maximale de température entre les différentes cellules de la batterie d'au plus 7 °C, préférentiellement d'au plus 5 °C.

Une telle régulation sensiblement uniforme de la température n'est pas possible avec des alimentations et évacuations ponctuelles ou multiponctuelles comme évoqué ci-dessus (c'est-à-dire par une ou plusieurs entrées et sorties localisées de fluide liquide caloporteur) et qui génèrent au moins une zone sur-réfrigérée ou froide et/ou au moins une zone sous-réfrigérée ou chaude, ou au mieux un gradient de variation de température important, avec un différentiel entre températures extrêmes dépassant la valeur maximale précitée.

En outre, on recherche aussi une optimisation de l'utilisation de la puissance réfrigérante, à savoir focaliser cette réfrigération sur les cellules et au plus près de celles-ci.

Par le document US 2017/0062884, on connait une batterie régulée en température et notamment refroidie par air, dans laquelle un flux d'air forcé circule entre les différentes cellules de la batterie, lesquelles reposent sur un fond ajouré. Ce flux d'air qui entre en contact direct avec les cellules est injecté latéralement dans le volume intérieur du boitier de la batterie et peut buter sur une plaque de diffusion isolante formant une paroi latérale dans ce boîtier.

La présente invention a pour but principal de fournir une solution aux inconvénients et aux attentes précités.

A cet effet, elle a pour objet une unité de batterie, notamment pour véhicule automobile hybride et/ou électrique, présentant les caractéristiques de la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A] et
[Fig. 1B] représentent respectivement avec une vue de dessus et une vue en coupe (selon A-A de la figure 1A) une unité de batterie selon l'invention (le capot de recouvrement supérieur étant représenté en traits pointillés sur la figure 1B) ;
[Fig. 2A] illustre un arrangement de cellules sur une plaque de refroidissement selon un autre mode de réalisation de l'invention, par exemple un arrangement formant une composante fractionnaire (module) d'une batterie et sa plaque de refroidissement associée ;
[Fig. 2B] illustre un exemple de circuit ou chemin de circulation de la plaque de refroidissement de la figure 2A, sous la forme d'un serpentin ;
[Fig. 2C] illustre la circulation du fluide liquide caloporteur dans le circuit ou chemin de circulation de la figure 2B et l'emplacement des cellules chaudes et froides ;
[Fig. 3] est une vue en coupe schématique de cellules de batterie (regroupées en un module comme sur les figures 2) reposant sur une plaque de refroidissement comprenant un élément surfacique à conductivité thermique élevée ;
[Fig. 3A] est une vue du détail A de la figure 3 illustrant la circulation du fluide liquide caloporteur à son entrée dans le volume de circulation, et la zone sur-réfrigérée en l'absence d'écran thermique ;
[Fig. 3B] est une vue du détail A de la figure 3 après mise en place d'un écran thermique selon l'invention ;
[Fig. 4] et
[Fig. 5] sont des vues en perspective de la seconde face d'un autre exemple d'élément surfacique à conductivité thermique élevée respectivement sans et avec un écran thermique rapporté par surmoulage selon une première variante de réalisation de l'invention ;
[Fig. 6A] et
[Fig. 6B] sont des vues éclatées en perspective illustrant la mise en place d'un écran thermique séparé, rapporté dans une plaque de refroidissement selon une autre variante constructive de l'invention ;
[Fig. 6C] est une vue partielle d'un détail de la figure 6B, à une échelle différente ;
[Fig. 7A] est une vue partielle en perspective et en coupe, à une échelle différente, de la plaque de la figure 6B après assemblage ;
[Fig. 7B] est une vue de détail en coupe et en élévation, à une échelle différente, de la plaque de la figure 6B après assemblage ;
[Fig. 8] est une vue éclatée en perspective de l'unité de batterie des figures 1, illustrant le mode de montage d'un écran thermique en accord avec les figures 6B et 6C, pour la réalisation d'une unité de batterie selon les figures 1 ;
[Fig. 9A] est une vue en perspective de la pièce formant écran thermique présente dans les plaques des figures 6 et 7, et,
[Fig. 9B] est une vue de détail de la pièce de la figure 9A.

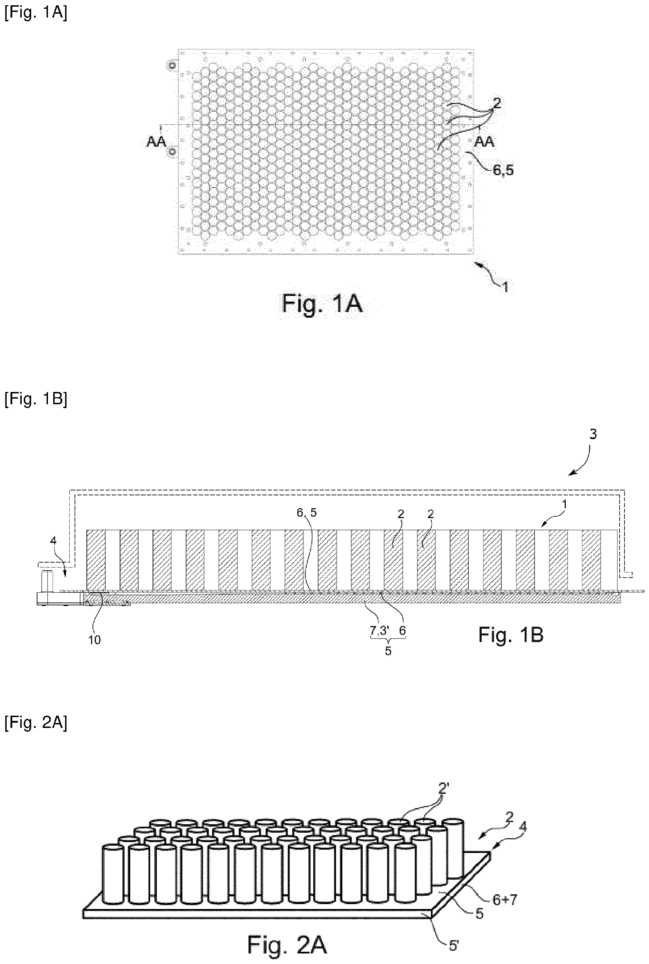

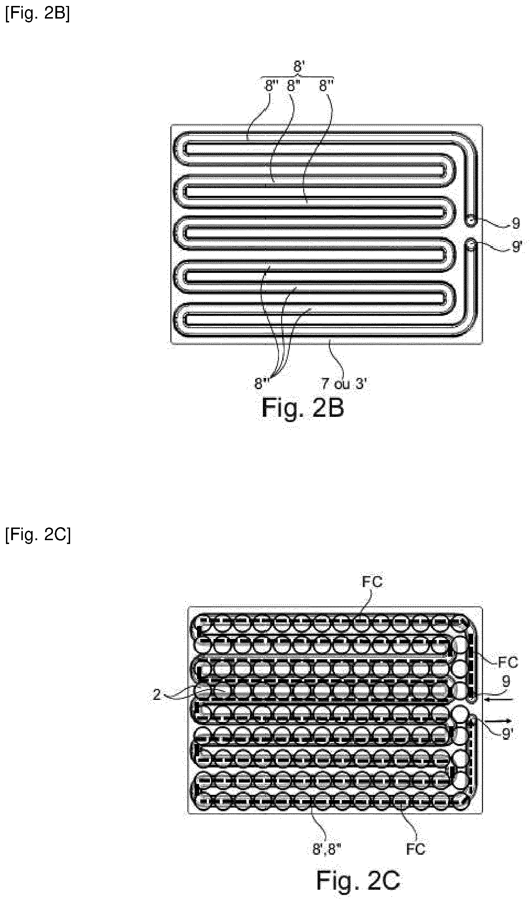

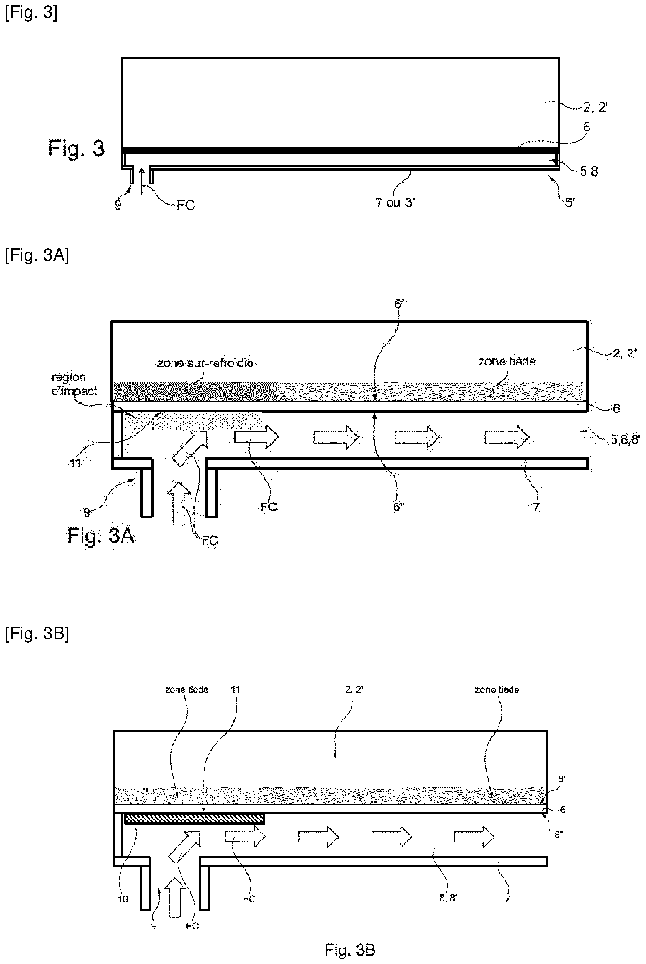

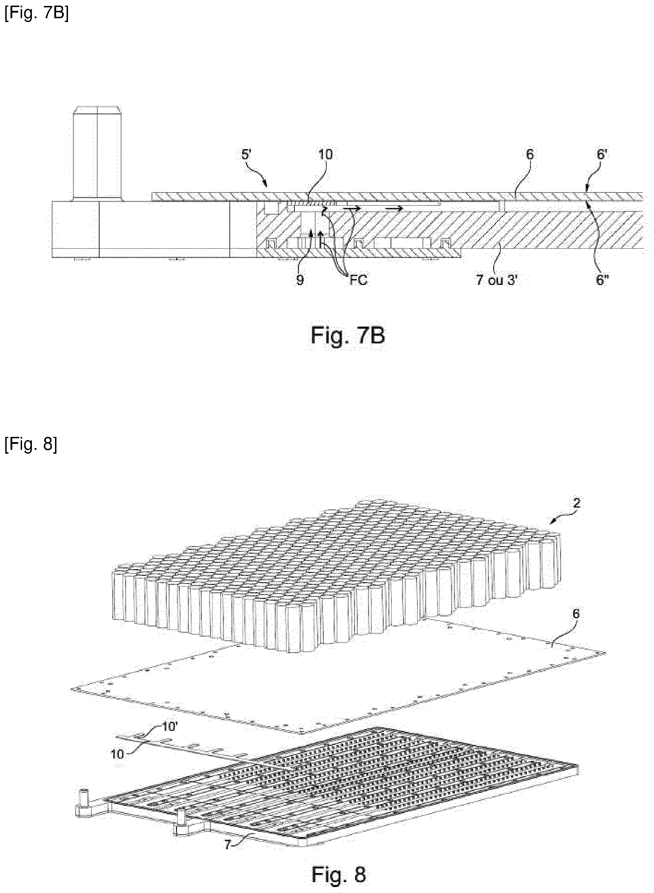

Les figures 1 et 8 et partiellement les figures 2 à 7 montrent une unité de batterie 1, notamment pour véhicule automobile hybride et/ou électrique, comprenant essentiellement, d'une part, une pluralité de cellules 2 ou d'éléments de batterie, le cas échéant regroupé(e)s physiquement et/ou électriquement en plusieurs blocs ou modules 2', d'autre part, un boîtier 3 logeant lesdit(e)s cellules ou éléments 2 et, enfin, des moyens de régulation de la température desdit(e)s cellules ou éléments 2 par circulation de fluide caloporteur FC. Ces moyens de régulation comportent, au niveau d'une région de fond 4 du boîtier 3 sur laquelle reposent les cellules 2, au moins une, préférentiellement plusieurs, zone(s) 5 d'échange thermique entre lesdites cellules 2 et le fluide caloporteur FC. Cette ou chaque zone 5 (une zone pour toute l'unité de batterie ou une zone pour chacun des modules constituant l'unité) comprend un élément surfacique 6 à conductivité thermique élevée, préférentiellement métallique, qui est en contact sur une première face 6' avec des cellules 2 et en contact sur sa seconde face 6" avec le fluide caloporteur FC, et qui délimite avec un autre élément surfacique complémentaire 7, ou avec la paroi de fond 3' du boîtier 3 ou une partie de cette dernière, une plaque de refroidissement 5' avec un volume de circulation 8 interstitiel, intégrant avantageusement au moins un chemin ou réseau de circulation 8' formé de portions de canaux 8", avec au moins une entrée d'alimentation 9 et au moins une sortie d'évacuation 9' de fluide caloporteur, préférentiellement liquide.

La ou chaque plaque de refroidissement 5' peut être formée soit par l'assemblage de deux éléments surfaciques métalliques 6 et 7, par exemple une plaque plane et une coque creuse, soit par l'assemblage d'un élément surfacique métallique 6 avec la paroi de fond 3' creusée du boîtier 3, en matériau plastique par exemple (comme divulgué par les documents WO cités en introduction).

Comme le montrent notamment les figures 1B, 2A et 8, chaque cellule 2 repose sur la face 6' d'un élément surfacique 6, et ainsi toutes les cellules 2 reposent sur une plaque de refroidissement 5' d'une zone d'échange thermique 5, disposée au niveau du fond du boîtier 3, qui forme une structure étanche, et sont arrangées selon une couche unique.

Conformément à l'invention, l'élément surfacique 6 en contact simultané avec le fluide caloporteur FC, préférentiellement liquide, et les cellules 2 est muni de ou comprend au moins un élément 10 dégradant localement l'échange thermique entre ledit fluide FC et la première face 6' de l'élément surfacique 6 en contact avec les cellules 2, au moins dans une région 11 de l'élément surfacique 6 au niveau de laquelle aucune cellule 2 n'est en contact avec ladite première face 6' et/ou au niveau de laquelle le flux de circulation de fluide (FC) est susceptible de venir en contact avec un angle d'incidence notable, voire frontalement ou perpendiculairement, avec la seconde face 6".

En modifiant au moins localement le coefficient de transmission thermique à travers l'élément surfacique 6, et ce au moins au niveau de la partie de cet élément impactée par le flux entrant froid de fluide liquide caloporteur FC, et préférentiellement uniquement dans la région de cet endroit, le sur-refroidissement des cellules 2 reposant sur cette partie ou à proximité peut être évité, et ainsi le différentiel maximal de température entre cellules maintenu inférieur à la valeur seuil souhaitée.

Bien entendu, on recherche prioritairement, par soucis d'efficacité et de performance, une transmission thermique maximale entre le fluide liquide et les cellules, tout en isolant en termes d'étanchéité ces dernières par rapport audit fluide. Ce résultat est obtenu par un contact (avec appui sous l'effet de la pesanteur) de l'ensemble des cellules 2 sur l'élément surfacique 6 et une proximité thermique réduite entre ces cellules 2 et le fluide caloporteur (transmission calorique élevée du fait des caractéristiques de l'élément surfacique 6). Par conséquent, la dégradation proposée par l'invention est avantageusement limitée en termes de magnitude et d'extension surfacique, et préférentiellement au minimum nécessaire pour atteindre le but recherché.

Les caractéristiques de cette dégradation peuvent résulter d'une analyse préalable par cartographie thermique des températures des cellules dans différentes conditions de fonctionnement et de refroidissement correspondant par la plaque de refroidissement, en l'absence de dégradation locale. La fabrication même de l'élément surfacique 6 peut avantageusement tenir compte des résultats de cette cartographie et les caractéristiques constructives (épaisseur variable, type variable de matériau constitutif) dudit élément 6 peuvent être déterminées pour compenser ces différences et variations de températures. Toutefois, une telle approche est dans de nombreux cas trop complexe et trop coûteuse pour être mise en œuvre industriellement dans le contexte de l'invention, et n'est souvent pas nécessaire pour résoudre le problème. Toutefois, la cartographie précitée peut être utilisée pour définir une solution approchante, plus simple et moins coûteuse.

Par l'expression « angle d'incidence notable », on entend dans la présente un angle d'au moins 45° par exemple par rapport à la seconde face 6" de l'élément 6, voire plutôt au moins 70° ou encore sensiblement 90° (impact frontal). Avec une telle mise en contact, la capacité du fluide liquide FC à extraire des calories de l'élément 6 est fortement augmentée, par rapport à un écoulement selon une direction sensiblement tangentielle à ladite face 6", d'où un sur-refroidissement.

Préférentiellement, l'élément 10 dégradant localement l'échange thermique consiste ainsi en un écran thermique rapporté sur la seconde face 6", en étant en contact avec cette face ou en s'étendant essentiellement à distance de cette dernière.

Selon un premier mode de réalisation, non représenté, l'écran thermique 10 peut comprendre une paroi s'étendant à distance de l'élément surfacique 6 à conductivité thermique élevée, et formant avec ce dernier un volume étanche creux, vide ou rempli d'un matériau isolant.

Ainsi, un volume isolant recouvrant une partie au moins de la seconde face 6" est créé.

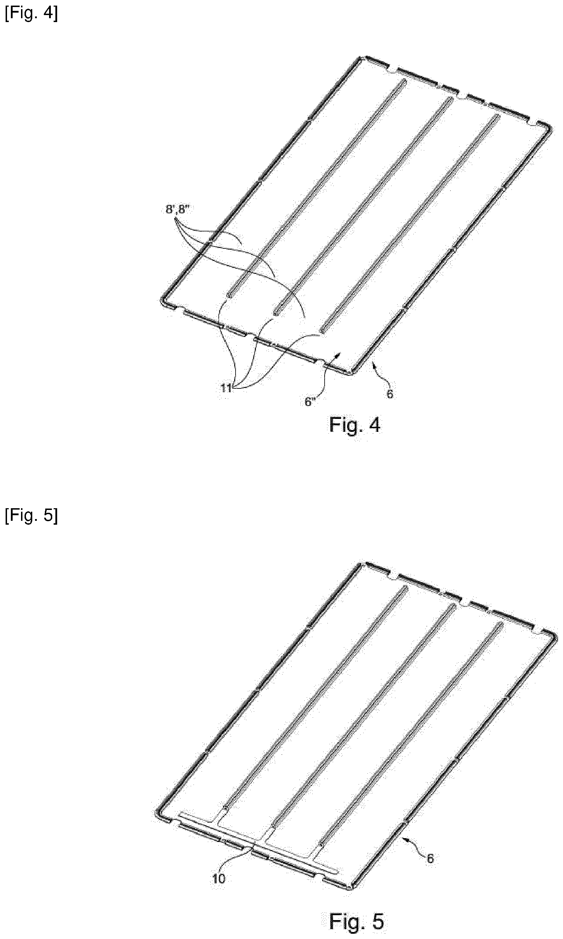

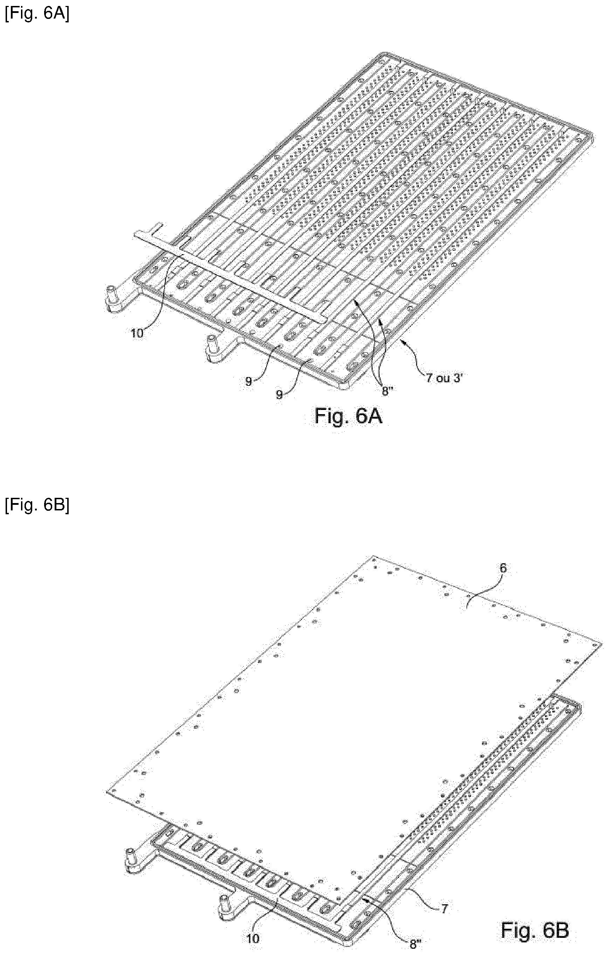

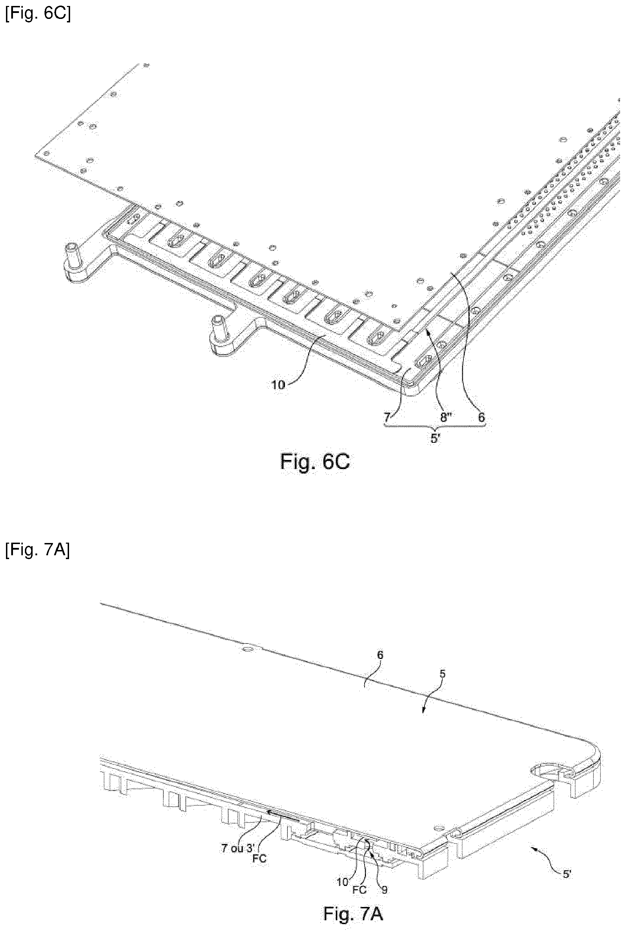

Selon un second mode de réalisation, ressortant des figures 1B, 3B et 5 à 9, l'écran thermique 10 peut consister en une couche de matériau à faible conductivité thermique, préférentiellement en une matière isolante, rapportée avec application intime sur la seconde face 6" de l'élément surfacique 6 à conductivité thermique élevée, soit en tant que pièce séparée solidarisée par fixation mécanique, par collage ou par serrage (figures 6 à 9), soit en tant que couche surmoulée localement (figure 5). Dans le premier cas, la pièce 10 est préférentiellement prémontée dans la seconde pièce 7 ou le fond du boîtier 3' et dans le second cas la couche 10 est préférentiellement surmoulée sur l'élément surfacique 6. L'élément 10 peut aussi résulter d'un traitement local particulier de l'élément surfacique 6 lui-même.

Bien entendu, la forme et l'extension de cette couche ou pièce 10 sont adaptées à la géométrie locale de la région, et son épaisseur éventuellement variable, en fonction des résultats de cartographies thermiques du type évoqué précédemment. En outre, ladite couche ou pièce 10 peut aussi ne s'étendre que sur une partie de la surface de la face 6" impactée de manière excessive, par exemple frontalement ou au moins avec un angle d'incidence notable, par le flux de fluide liquide FC, en fonction du degré de diminution de l'effet refroidissant local recherché.

Lorsqu'une modification de la conduction thermique est souhaitée au niveau des deux zones thermiquement critiques de la plaque de refroidissement et pour les cellules qui reposent sur elles, il peut être prévu qu'un élément 10, dégradant localement l'échange thermique entre ledit fluide liquide FC et la première face 6' de l'élément surfacique 6 en contact avec les cellules 2, est présent dans la région attenante à l'entrée d'alimentation 9, au moins au niveau d'une étendue de l'élément 6 susceptible d'être impactée frontalement par le flux de fluide liquide caloporteur (FC), et avantageusement aussi dans au moins une autre région dudit élément surfacique 6 susceptible d'être impactée sensiblement frontalement par le flux de fluide liquide caloporteur FC. Ce sont à ces endroits, et à ceux dépourvus de cellules 2 en contact, que l'effet d'un élément 10 s'avère le plus efficace et nécessaire pour résoudre le problème posé à l'invention.

Notamment, lorsque plusieurs entrées sont présentes, il peut être prévu qu'à la ou chaque région 11 attenante à la ou chaque entrée d'alimentation 9, et avantageusement à la ou chaque région ou zone 11 de l'élément surfacique 6 avec laquelle le flux de circulation de fluide liquide caloporteur FC est susceptible d'entrer en contact sensiblement frontalement, est associé un élément 10 correspondant dégradant localement l'échange thermique entre ledit fluide liquide FC et la première face 6' de l'élément surfacique 6 en contact avec les cellules 2.

En vue d'étendre l'effet d'écran thermique et donc diminuer davantage l'écart de température maximal entre cellules et réduire l'ampleur du gradient thermique dans la batterie, et comme le montrent les figures 4 et 5, l'élément ou chaque élément 10 dégradant localement l'échange thermique entre ledit fluide liquide FC et la première face 6' de l'élément surfacique 6 s'étend au moins partiellement dans les portions de canaux 8" formant ledit au moins un chemin ou réseau de circulation 8', au moins à proximité de l'entrée d'alimentation 9. Ces portions de canaux 8" peuvent par exemple faire partie ou constituer des débuts de ramifications secondaires d'un conduit ou canal collecteur d'alimentation de plusieurs portions de canaux 8'.

En accord avec une construction simple et aisée à réaliser, la ou chaque pièce rapportée 10 formant écran thermique est solidarisée par serrage en étant prise en sandwich entre l'élément surfacique 6 à conductivité thermique élevée et soit l'autre élément surfacique complémentaire 7, soit la paroi de fond 3' du boîtier 3 ou une partie de cette dernière (cf. figures 6 à 8).

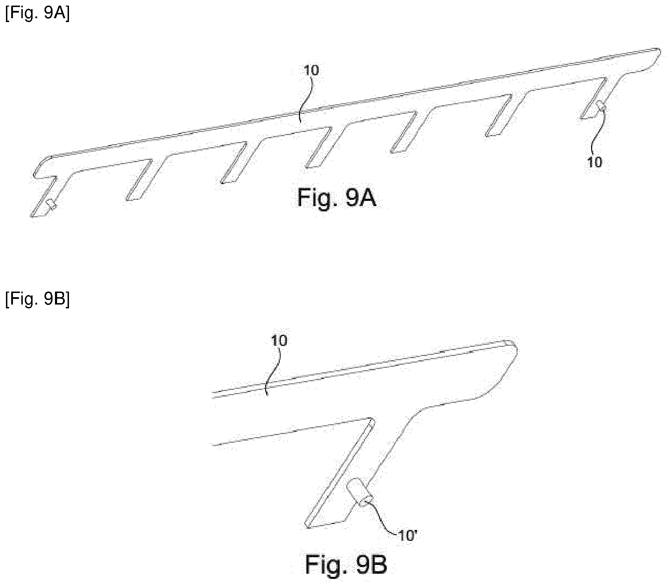

Pour faciliter et permettre l'automatisation de l'assemblage de la plaque de refroidissement, la ou chaque pièce rapportée 10 formant écran thermique peut comporter des moyens 10' de centrage et/ou d'indexage au montage, par exemple au moins un pion de centrage moulé ou rapporté (cf. figures 6A, 9A et 9B).

Comme le montrent les figures 6 à 9, la ou chaque pièce rapportée 10 formant écran thermique peut avantageusement présenter une forme en peigne ou en râteau.

Dans la présente, une conductivité thermique élevée, et plus généralement un bon transfert thermique entre le fluide liquide FC et les cellules 2, est atteinte en utilisant un matériau pour l'élément surfacique 6 intrinsèquement bon conducteur thermique (plaquette métallique) et utilisé en faible épaisseur, en relation avec une surface de contact maximale et une qualité de contact optimisée entre l'élément surfacique 6 et les cellules 2, le cas échéant du module 2' concerné.

La faible conductivité de l'écran thermique 10 quant à elle peut être atteinte en utilisant un matériau faiblement conducteur thermique, voire isolant thermiquement, en combinaison avec une épaisseur relativement importante de cet écran.

Typiquement, on entend dans la présente par conductivité thermique λ élevée, des valeurs de λ telles que λ > 50 W.m⁻¹.K⁻¹, préférentiellement λ > 100 W.m⁻¹.K⁻¹ et par faible conductivité thermique λ, des valeurs des λ telles que λ < 1 W.m⁻¹.K⁻¹, préférentiellement λ < 0,5 W.m⁻¹.K⁻¹.

Avantageusement, le matériau à bonne conductivité thermique a une conductivité entre 100 W/m/K et 300 W/m/K, typiquement 200 W/m/K comme l'aluminium. De manière équivalente, le matériau à conductivité thermique faible a une conductivité entre 0,05 W/m/K et 0,5 W/m/K, typiquement 0,2 W/m/K comme le plastique de type PP GF30.

L'homme du métier comprend aisément que les caractéristiques de l'invention sont applicables quel que soit le type de cellules 2 de la batterie, à savoir notamment : cylindrique, « pouch » (poche) ou prismatique.

L'invention concerne également un procédé de fabrication d'un boîtier 3 pour une unité de batterie 1 telle que décrite ci-dessus et comprenant une région de fond 4 sur laquelle reposent les cellules 2 de la batterie et qui comporte au moins une, préférentiellement plusieurs, zone(s) 5 d'échange thermique entre lesdites cellules 2 et le fluide liquide caloporteur (FC), ladite ou chaque zone 5 comprenant un élément surfacique 6 à conductivité thermique élevée, préférentiellement métallique, qui est en contact sur une première face 6' avec des cellules 2 et en contact sur sa seconde face 6" avec le fluide liquide caloporteur (FC), et qui délimite avec un autre élément surfacique complémentaire 7, ou avec la paroi de fond 3' du boîtier 3 ou une partie de cette dernière, une plaque de refroidissement 5' avec un volume de circulation 8 interstitiel, intégrant avantageusement au moins un chemin ou réseau de circulation 8' formé de portions de canaux 8", et qui comporte au moins une entrée d'alimentation 9 et au moins une sortie d'évacuation 9' de fluide liquide caloporteur.

Ce procédé est caractérisé en ce qu'il consiste à munir l'élément surfacique 6 en contact simultané avec le fluide liquide (FC) et les cellules 2, par solidarisation ou par intégration, d'au moins un élément 10 dégradant localement l'échange thermique entre ledit fluide liquide (FC) et la première face 6' de l'élément surfacique 6 en contact avec les cellules 2, cela au moins dans une région 11 de l'élément surfacique 6 au niveau de laquelle aucune cellule 2 n'est en contact avec ladite première face 6' et/ou au niveau de laquelle le flux de circulation de fluide liquide (FC) est susceptible de venir en contact selon un angle d'incidence notable, voire frontalement ou perpendiculairement, avec la seconde face 6".

En accord avec l'invention, il peut être prévu d'établir et d'exploiter, pour la réalisation de la paroi de fond 3' du boîtier 3 et de la plaque de refroidissement 5', en particulier pour la définition et la localisation des éléments 10 dégradant localement l'échange thermique, une cartographie de la répartition des cellules 2 dans le boîtier 3 et de la circulation du fluide liquide (FC) dans le volume de circulation 8. L'établissement et/ou l'exploitation d'un tel document ou fichier peut être réalisé par un opérateur humain ou alors, au moins partiellement ou entièrement, par des moyens informatiques, le cas échéant associés à des dispositifs automatisés ou robotisés.

Ainsi, la configuration des zones 5 d'échange thermique privilégié et celle des chemins de circulation 8' peuvent dans un premier temps être optimisées pour limiter au maximum le recours auxdits éléments ou traitements dégradant localement l'échange thermique.

Différentes solutions techniques sont connues de l'homme du métier pour réaliser pratiquement un tel boîtier 3, notamment l'assemblage par soudage par friction ou par laser, par collage ou par vissage ou rivetage, de plusieurs parties fabriquées par moulage ou surmoulage de matériaux thermoplastiques.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Unité de batterie (1), notamment pour véhicule automobile hybride et/ou électrique, comprenant essentiellement, d'une part, une pluralité de cellules (2) ou d'éléments de batterie, le cas échéant regroupé(e)s physiquement et/ou électriquement en plusieurs blocs ou modules (2'), d'autre part, un boîtier (3) logeant lesdit(e)s cellules ou éléments (2) et, enfin, des moyens de régulation de la température desdit(e)s cellules ou éléments (2) par circulation de fluide caloporteur (FC), lesquels comportent, au moins au niveau d'une région de fond (4) dudit boîtier (3) sur laquelle reposent les cellules (2), au moins une, préférentiellement plusieurs, zone(s) (5) d'échange thermique entre lesdites cellules (2) et le fluide caloporteur (FC), ladite ou chaque zone (5) comprenant un élément surfacique (6) à conductivité thermique (λ) élevée, par exemple telle que λ > 50 W.m⁻¹.K⁻¹, préférentiellement métallique, qui est en contact sur une première face (6') avec des cellules (2) et en contact sur sa seconde face (6") avec le fluide caloporteur (FC), et qui délimite avec un autre élément surfacique complémentaire (7), ou avec la paroi de fond (3') du boîtier (3) ou une partie de cette dernière, une plaque de refroidissement (5') avec un volume de circulation (8) interstitiel, intégrant avantageusement au moins un chemin ou réseau de circulation (8') formé de portions de canaux (8"), avec au moins une entrée d'alimentation (9) et au moins une sortie d'évacuation (9') de fluide caloporteur,
unité de batterie (1) **caractérisée en ce que** l'élément surfacique (6) en contact simultané avec le fluide caloporteur (FC), préférentiellement liquide, et les cellules (2) est muni de ou comprend au moins un élément (10) dégradant localement l'échange thermique entre ledit fluide caloporteur (FC) et la première face (6') de cet élément surfacique (6) en contact avec les cellules (2), cela au moins dans une région (11) de l'élément surfacique (6) au niveau de laquelle aucune cellule (2) n'est en contact avec ladite première face (6') et/ou au niveau de laquelle le flux de circulation de fluide caloporteur (FC) est susceptible de venir en contact selon un angle d'incidence notable, voire frontalement ou perpendiculairement, avec la seconde face (6").

2. Unité de batterie selon la revendication 1, **caractérisée en ce que** l'élément (10) dégradant localement l'échange thermique consiste en un écran thermique rapporté sur la seconde face (6"), en étant en contact avec cette face ou en s'étendant essentiellement à distance de cette dernière.

3. Unité de batterie selon la revendication 2, **caractérisée en ce que** l'écran thermique (10) comprend une paroi s'étendant à distance de l'élément surfacique (6) à conductivité thermique élevée, et formant avec ce dernier un volume étanche creux, vide ou rempli d'un matériau isolant.

4. Unité de batterie selon la revendication 2, **caractérisée en ce que** l'écran thermique (10) consiste en une couche de matériau à faible conductivité thermique (λ), par exemple telle que λ < 1 W.m⁻¹.K⁻¹, préférentiellement en une matière isolante, rapportée avec application intime sur la seconde face (6") de l'élément surfacique (6) à conductivité thermique élevée, soit en tant que pièce séparée solidarisée par fixation mécanique, par collage ou par serrage, soit en tant que couche surmoulée localement.

5. Unité de batterie selon l'une quelconque des revendications 1 à 4, **caractérisée en ce qu'**un élément (10), dégradant localement l'échange thermique entre ledit fluide liquide (FC) et la première face (6') de l'élément surfacique (6) en contact avec les cellules (2), est présent dans la région attenante à l'entrée d'alimentation (9), au moins au niveau d'une étendue de l'élément (6) susceptible d'être impactée frontalement par le flux de fluide liquide caloporteur (FC), et avantageusement aussi dans au moins une autre région dudit élément surfacique (6) susceptible d'être impactée sensiblement frontalement par le flux de fluide liquide caloporteur (FC).

6. Unité de batterie selon l'une quelconque des revendications 1 à 4, **caractérisée en ce qu'**à la ou chaque région (11) attenante à la ou chaque entrée d'alimentation (9), et avantageusement à la ou chaque région ou zone (11) de l'élément surfacique (6) avec laquelle le flux de circulation de fluide liquide caloporteur (FC) est susceptible d'entrer en contact sensiblement frontalement, est associé un élément (10) dégradant localement l'échange thermique entre ledit fluide liquide (FC) et la première face (6') de l'élément surfacique (6) en contact avec les cellules (2).

7. Unité de batterie selon l'une quelconque des revendications 1 à 6, **caractérisée en ce que** l'élément ou chaque élément (10) dégradant localement l'échange thermique entre ledit fluide liquide (FC) et la première face (6') de l'élément surfacique (6) s'étend au moins partiellement dans les portions de canaux (8") formant ledit au moins un chemin ou réseau de circulation (8'), au moins à proximité de l'entrée d'alimentation (9).

8. Unité de batterie selon l'une quelconque des revendications 1 à 7, **caractérisée en ce que** la ou chaque pièce rapportée (10) formant écran thermique est solidarisée par serrage en étant prise en sandwich entre l'élément surfacique (6) à conductivité thermique (λ) élevée, par exemple telle que λ > 50 W.m⁻¹.K⁻¹, et soit l'autre élément surfacique complémentaire (7), soit la paroi de fond (3') du boîtier (3) ou une partie de cette dernière.

9. Unité de batterie selon l'une quelconque des revendications 1 à 8, **caractérisée en ce que** la ou chaque pièce rapportée (10) formant écran thermique comporte des moyens (10') de centrage et/ou d'indexage au montage, par exemple au moins un pion de centrage moulé ou rapporté.

10. Unité de batterie selon l'une quelconque des revendications 1 à 9, **caractérisée en ce que** la ou chaque pièce rapportée (10) formant écran thermique présente une forme en peigne ou en râteau.

11. Procédé de fabrication d'un boîtier (3) pour une unité de batterie (1) selon l'une quelconque des revendications 1 à 10 et comprenant une région de fond (4) sur laquelle reposent les cellules (2) de la batterie et qui comporte au moins une, préférentiellement plusieurs, zone(s) (5) d'échange thermique entre lesdites cellules (2) et le fluide liquide caloporteur (FC), ladite ou chaque zone (5) comprenant un élément surfacique (6) à conductivité thermique (λ) élevée, par exemple telle que λ > 50 W.m⁻¹.K⁻¹, préférentiellement métallique, qui est en contact sur une première face (6') avec des cellules (2) et en contact sur sa seconde face (6") avec le fluide liquide caloporteur (FC), et qui délimite avec un autre élément surfacique complémentaire (7), ou avec la paroi de fond (3') du boîtier (3) ou une partie de cette dernière, une plaque de refroidissement (5') avec un volume de circulation (8) interstitiel, intégrant avantageusement au moins un chemin ou réseau de circulation (8') formé de portions de canaux (8"), et qui comporte au moins une entrée d'alimentation (9) et au moins une sortie d'évacuation (9') de fluide liquide caloporteur,
procédé **caractérisé en ce qu'**il consiste à munir l'élément surfacique (6) en contact simultané avec le fluide liquide (FC) et les cellules (2), par solidarisation ou par intégration, d'au moins un élément (10) dégradant localement l'échange thermique entre ledit fluide liquide (FC) et la première face (6') de l'élément surfacique (6) en contact avec les cellules (2), cela au moins dans une région (11) de l'élément surfacique (6) au niveau de laquelle aucune cellule (2) n'est en contact avec ladite première face (6') et/ou au niveau de laquelle le flux de circulation de fluide liquide (FC) est susceptible de venir en contact selon un angle d'incidence notable, voire frontalement ou perpendiculairement, avec la seconde face (6").

12. Procédé selon la revendication 11, **caractérisé en ce qu'**il consiste à établir et à exploiter, pour la réalisation de la paroi de fond (3') du boîtier (3) et de la plaque de refroidissement (5'), en particulier pour la définition et la localisation des éléments (10) dégradant localement l'échange thermique, une cartographie de la répartition des cellules (2) dans le boîtier (3) et de la circulation du fluide liquide (FC) dans le volume de circulation (8).
